# DEMANDE DE BREVET EUROPEEN

(11) **EP 0 609 156 A1**
(43) Date de publication de la demande: **03.08.1994**
(21) Numéro de dépôt: 94410003.1
(22) Date de dépôt: 24.01.1994
(51) Int. Cl.: G06F 1/00, G07F 7/10

(54) **Système détecteur de falsification d'informations mémorisées**

(30) Priorité: 26.01.1993 FR 9300998
(71) Demandeur: MONETEL S.A., F-07500 Granges-les-Valence (FR)
(72) Inventeur: Roux, Pascal, F-26120 Chabeuil (FR)
(74) Mandataire: de Beaumont, Michel

(57) **Abrégé**

La présente invention concerne un système de détection de falsification d'informations mémorisées comprenant une mémoire non-volatile (1), dont des premières cellules contiennent des informations dont on veut détecter l'éventuelle falsification et des deuxièmes cellules contiennent une valeur de contrôle ; un lecteur (8) pour lire et modifier les informations, lire et recalculer la valeur de contrôle, vérifier la concordance entre les valeurs lues et recalculées, modifier la valeur de contrôle à chaque modification des informations ; et au moins un dispositif à mémoire (6) destiné à coopérer avec le lecteur pour que ce dernier puisse seulement lire le contenu du dispositif, modifier ce contenu de manière irréversible à chaque modification des informations, et calculer la nouvelle valeur de contrôle en tenant compte du contenu du dispositif.

## Description

La présente invention concerne les systèmes de mémorisation d'informations et plus particulièrement un système permettant de détecter que des informations mémorisées ont été modifiées de façon non autorisée, cette modification correspondant notamment en la recopie dans le dispositif de mémorisation d'un état antérieur des informations contenues en mémoire, ou d'informations contenues dans un dispositif de mémorisation similaire.

La présente invention s'applique à des dispositifs de mémorisation dans lesquels les informations contenues en mémoire peuvent être lues directement et non pas à des dispositifs dans lesquels l'accès à certaines ou à toutes les informations mémorisées est lui-même protégé.

Comme on le verra ci-après, la présente invention concerne de très nombreux types de dispositifs de mémorisation d'informations et de systèmes de lecture/écriture associés. Il peut par exemple s'agir de systèmes de type à carte à mémoire telles que des cartes de paiement, des cartes de mémorisation d'informations personnelles, par exemple des informations médicales, ces cartes étant destinées à être lues et éventuellement modifiées quand elles sont mises en présence d'un système de lecture/écriture, avec ou sans contact. Il peut aussi s'agir de blocs mémoire associés à des machines dont on veut surveiller le fonctionnement, par exemple des machines d'émission de titres de transport, le contenu de ces blocs mémoire étant lu et écrit par un système lié à la machine et pouvant être relu et remis à jour en reliant la machine à un système de lecture avec ou sans contact...

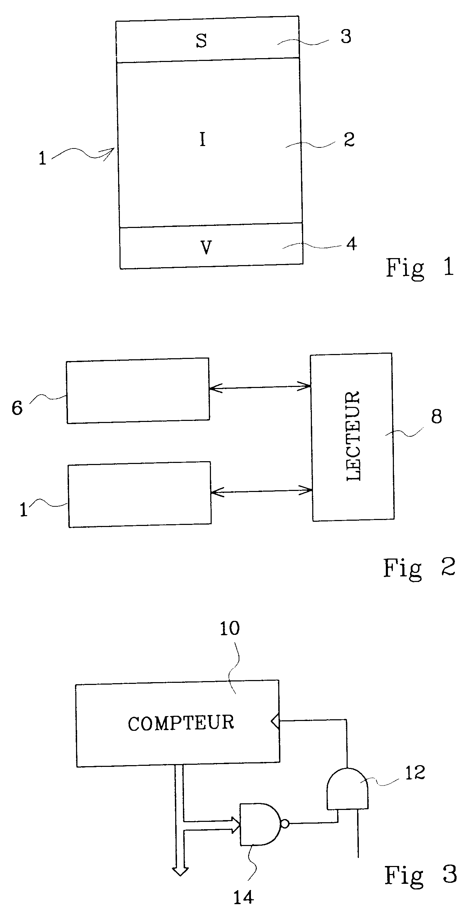

De façon classique une telle mémoire 1 est organisée de la façon illustrée en figure 1. Elle comprend une zone 2 où sont inscrites les informations I à exploiter, éventuellement une zone 3 où sont inscrites des données S non effaçables caractéristisques de cette mémoire ou du dispositif dans lequel elle est insérée, par exemple un numéro de série et une zone 4 où est inscrite une valeur de contrôle V. La valeur de contrôle correspond au résultat d'un algorithme appliqué aux informations I de la zone 2 et, éventuellement aux informations S de la zone 3.

Lorsqu'un dispositif de lecture/écriture, ci-après appelé lecteur, couplé à la mémoire veut utiliser et modifier des informations I de la zone 2, il recalcule d'abord à partir des informations I et S contenues dans la mémoire la valeur de contrôle qui doit être associée à ces informations et la compare à la valeur de contrôle V mémorisée dans la zone 4.

En cas d'égalité, le lecteur effectue l'opération souhaitée sur les informations contenues dans la partie 2 de la mémoire, par exemple met à jour les informations nécessaires ou débite des unités dans le cas où la mémoire correspond à une carte de paiement, et ensuite le lecteur recalcule la nouvelle valeur de contrôle qu'il écrit dans la zone 4.

En cas d'inégalité, le lecteur détecte que les données de la mémoire sont corrompues, par exemple à la suite d'une modification frauduleuse des données I de la zone 2 et signale cet état.

Par exemple dans le cas d'une carte de paiement dans laquelle les informations correspondent à un crédit qui est annulé par le lecteur en fonction d'un service rendu, on évite grâce à la prise en compte du numéro de série mémorisé dans la zone 3 une fraude qui consisterait à recopier tel quel (y compris la valeur de controle) le contenu d'une carte pleine dans une carte vide. Dans ce cas, en effet, les numéros de série des deux cartes étant différents, la valeur de controle de la carte pleine deviendra fausse dans la carte frauduleusement remplie.

Toutefois, il demeure un type de fraude possible avec une telle carte. Un fraudeur peut réaliser un dispositif pour recopier et mémoriser toutes les données contenues initialement dans la mémoire d'une carte pleine, même si ces données sont cryptées. Après quoi, une fois que la carte est vidée, il pourra réécrire dans la carte les données initialement mémorisées. Cette fraude ne peut pas être détectée par les systèmes classiques car la valeur de contrôle calculée comme précédemment sera correcte.

Un objet de la présente invention est de prévoir un dispositif de mémorisation d'informations présentant une protection anti-fraude particulièrement efficace et rendant impossible la fraude susmentionnée.

Ces objets sont atteints grâce à un système de détection de falsification d'informations mémorisées comprenant une mémoire non-volatile reprogrammable, dont des premières cellules contiennent des informations dont on veut détecter l'éventuelle falsification et des deuxièmes cellules contiennent au moins une valeur de contrôle ; un lecteur pour lire et modifier les informations, lire et recalculer la ou les valeurs de contrôle, vérifier la concordance entre les valeurs lues et recalculées, modifier la ou les valeurs de contrôle à chaque modification desdites informations ; et au moins un dispositif à mémoire destiné à coopérer avec le lecteur pour que ce dernier puisse seulement lire le contenu dudit dispositif, modifier ce contenu de manière irréversible à chaque modification desdites informations, et calculer la ou les nouvelles valeurs de contrôle en tenant compte du contenu dudit dispositif.

Selon un mode de réalisation de la présente invention, la mémoire et le dispositif sont regroupés dans un même sous-ensemble distinct du lecteur.

Selon un mode de réalisation de la présente invention, la mémoire contient un crédit d'unités.

Selon un mode de réalisation de la présente invention, la mémoire comprend des cellules accessibles en lecture seulement et contenant un numéro de série utilisé pour le calcul de la ou les valeurs de contrôle.

Selon un mode de réalisation de la présente invention, la liaison entre ledit sous-ensemble et le lecteur est réalisée sans contact.

Selon un mode de réalisation de la présente invention, le dispositif est une mémoire programmable à lecture seule.

Ces objets, caractéristiques et avantages ainsi que d'autres de la présente invention seront exposés en détail dans la description suivante de modes de réalisation particuliers faite en relation avec les figures jointes parmi lesquelles :
la figure 1, précédemment décrite, représente un exemple classique d'organisation de mémoire ;
la figure 2 représente sous forme de blocs la structure d'un système anti-fraude selon l'invention ; et
la figure 3 représente un mode de réalisation d'un élément du système de la figure 2.

Dans les figures, des mêmes éléments sont désignés par des mêmes références.

Selon l'invention, un dispositif 6 est associé à la mémoire 1 au moins pendant les périodes où celle-ci est couplée au lecteur 8 permettant de modifier les informations qu'elle contient. Le dispositif 6 est un dispositif à mémoire dont le contenu peut être lu par le lecteur 8 et est modifié de manière irréversible chaque fois que le lecteur effectue une modification au contenu de la mémoire 1.

Le dispositif 6 est, par exemple, une mémoire programmable à lecture seule (PROM) dont on programme une case vierge à chaque incrément (chaque inscription dans la zone d'informations de la mémoire). De préférence, le dispositif 8 est un compteur (binaire ou selon un autre code) comprenant une entrée d'incrémentation et des sorties de lecture.

Dans l'exemple où la mémoire considérée est incorporée à une carte de paiement et où le dispositif selon l'invention est un compteur également incorporé à cette carte, le système est utilisé de la manière suivante. Lors d'une transaction, le lecteur calcule une valeur de contrôle à partir du contenu du compteur 6 et des données stockées dans les zones 2 et 3 de la mémoire 1. La valeur calculée est comparée à la valeur stockée dans la zone 4 de la mémoire 1. En cas d'égalité, le lecteur modifie les données à modifier dans la zone 2 de la mémoire et incrémente le contenu du compteur. Alors, la valeur de contrôle est recalculée de la même manière, c'est-à-dire à partir des données de la mémoire et du contenu du compteur, et inscrite dans la zone 4 de la mémoire à la place de la valeur de contrôle précédente.

Avec cette configuration, un fraudeur pourra toujours réécrire dans la mémoire non volatile d'un dispositif de paiement vide (usagé) son contenu initial, mais il ne pourra pas réécrire le contenu initial de celui-ci. Ainsi, comme la valeur de contrôle calculée par le lecteur à la prochaine transaction effectuée sur le dispositif falsifié est basée sur le contenu en cours du compteur, cette valeur de contrôle sera différente de la valeur initiale recopiée par le fraudeur et correspondant à l'état initial du compteur. Le lecteur pourra, à la suite de la détection de cette différence des valeurs de contrôle, émettre un signal d'alarme et/ou refuser le service à l'utilisateur.

Par contre, une recharge "légale" du dispositif de paiement est effectuée en tenant compte de la valeur en cours du compteur ou autre dispositif 6 pour calculer correctement la valeur de contrôle selon son algorithme de calcul.

De préférence, l'algorithme de calcul la valeur de contrôle est complexe, par exemple crypté par une clé, de manière qu'un fraudeur ne puisse pas déterminer la valeur de contrôle correcte. De même, comme pour les dispositifs de paiement classiques, la valeur de contrôle est calculée également à partir du numéro de série du dispositif de paiement, ce qui empêche une recopie valable du contenu d'un dispositif de paiement plein dans un dispositif de paiement vide dont le compteur serait au même état. Bien entendu, les données écrites dans la mémoire peuvent être cryptées et dispersées.

La figure 3 représente un exemple de réalisation du dispositif 6 réalisé par un compteur binaire 10 de manière à empêcher que son contenu passe à zéro après avoir atteint sa valeur maximale. Ce compteur est initialisé à zéro lors de sa fabrication. L'entrée d'incrémentation du compteur 10 est commandée par une porte ET 12 dont une première entrée reçoit l'ordre d'incrémentation du lecteur 8. Une deuxième entrée de la porte 12 est reliée à la sortie d'une porte NON ET 14 à plusieurs entrées dont chacune est reliée à l'une des lignes fournissant l'état du compteur 10 au lecteur 8.

Avec cette configuration, lorsque toutes les lignes de sortie du compteur sont à 1, c'est-à-dire si le compteur 10 est à sa valeur maximale, la sortie de la porte 14 passe à O et la porte 12 barre le passage aux ordres d'incrémentation provenant du lecteur 8. Ainsi, une fois que le compteur 10 a atteint sa valeur maximale, il y reste bloqué. Dans ce cas, le dispositif de paiement a atteint la fin de sa durée de vie et l'utilisateur doit le changer.

La capacité du compteur 10 est bien entendu choisie élevée pour que la valeur maximale ne soit jamais atteinte au cours de la durée normale d'utilisation d'un dispositif de paiement. En choisissant un compteur de 32 bits, par exemple, la durée de vie du dispositif de paiement correspond à environ 4 milliards de transactions, ce qui est plus que suffisant.

De nombreuses variantes et modifications de la présente invention apparaîtront à l'homme du métier, notamment en ce qui concerne :
- la nature de la mémoire 1 qui peut être une mémoire PROM faisant partie d'un système portable ou fixe mais qui peut aussi être tout autre type de mémoire non volatile par exemple une simple mémoire magnétique, ou une mémoire RAM sauvegardée par pile,
- la nature du dispositif de mémorisation incrémentable non effaçable 6 selon l'invention qui peut être un compteur ou une mémoire EEPROM, comme cela a été indiqué ci-dessus,
- le positionnement relatif de la mémoire 1 et du dispositif 6 qui peuvent faire partie d'un même sous-ensemble, portable ou non, ou être des éléments distincts qui coopèrent à chaque opération d'inscription et de lecture,
- l'utilisation du système selon l'invention : carte de paiement mono ou multiservice (auquel cas on prévoira de préférence un dispositif selon l'invention par service), carte d'identification, carte médicale, permis à point..., système d'enregistrement de données de fonctionnement ou de maintenance d'une machine...,
- le nombre des valeurs de contrôle et leur mode de cryptage.

## Revendications

1. Système de détection de falsification d'informations mémorisées comprenant :
- une mémoire non-volatile reprogrammable (1), dont des premières cellules (2) contiennent des informations dont on veut détecter l'éventuelle falsification et des deuxièmes cellules (4) contiennent au moins une valeur de contrôle ;
- un lecteur (8) pour lire et modifier les informations, lire et recalculer la ou les valeurs de contrôle, vérifier la concordance entre les valeurs lues et recalculées, modifier la ou les valeurs de contrôle à chaque modification desdites informations ;
caractérisé en ce qu'il comprend au moins un dispositif à mémoire (6) destiné à coopérer avec le lecteur pour que ce dernier puisse seulement lire le contenu dudit dispositif, modifier ce contenu de manière irréversible à chaque modification desdites informations, et calculer la ou les nouvelles valeurs de contrôle en tenant compte du contenu dudit dispositif.

2. Système de détection de falsification d'informations mémorisées selon la revendication 1, caractérisé en ce que la mémoire (1) et le dispositif (6) sont regroupés dans un même sous-ensemble distinct du lecteur.

3. Système de détection de falsification d'informations mémorisées selon la revendication 1 ou 2, caractérisé en ce que la mémoire (1) contient un crédit d'unités.

4. Système de détection de falsification d'informations mémorisées selon l'une quelconque des revendications 1 à 3, caractérisé en ce que la mémoire (1) comprend des cellules (3) accessibles en lecture seulement qui contiennent un numéro d'identification de cette mémoire utilisé pour le calcul de la ou les valeurs de contrôle.

5. Système de détection de falsification d'informations mémorisées selon l'une quelconque des revendications 2 à 4, caractérisé en ce que la liaison entre ledit sous-ensemble et le lecteur est réalisée sans contact.

6. Système de détection de falsification d'informations mémorisées selon l'une quelconque des revendications 1 à 5, caractérisé en ce que ledit dispositif (6) est une mémoire programmable à lecture seule (PROM).
